Europäisches Patentamt

European Patent Office

Office européen des brevets

(11) Publication number: **0 168 606 B1**

## EUROPEAN PATENT SPECIFICATION

(45) Date of publication of patent specification: **11.11.92**  (51) Int. Cl.5: **C04B 35/10**

(21) Application number: **85106752.0**

(22) Date of filing: **31.05.85**

The file contains technical information submitted after the application was filed and not included in this specification

(54) Process for producing alumina bodies.

(30) Priority: **14.06.84 US 620654**

(43) Date of publication of application:
**22.01.86 Bulletin 86/04**

(45) Publication of the grant of the patent:
**11.11.92 Bulletin 92/46**

(84) Designated Contracting States:
**AT BE CH DE FR GB IT LI NL SE**

(56) References cited:
EP-A- 0 024 099
GB-A- 1 175 887
US-A- 3 108 888
US-A- 4 379 134

86th ANNUAL MEETING OF THE AMERICAN CERAMIC SOCIETY, COMMUNICATIONS OF THE AMERICAN CERAMIC SOCIETY, vol. 67, no. 11, November 1984, pages C-230-C-231, Pittsburg, PA, US; M. KUMAGAI et al.: "Enhanced densification of boehmite sol-gels by alpha-alumina seeding"

CHEMICAL ABSTRACTS, vol. 95, no. 6, 10th August 1981, page 295, abstract no. 47832z, Columbus, Ohio, US; & PI-A-79 02 063

(COLOROBBIA BRASILEIRA PRODUTOS PARA CERAMICA LTDA) 21-10-1980

Kumagai and Messing: "Enhanced Densification of Boehmite Sol-Gels by -Alumina Seeding", S. C-230 und C-231, Communication of the American Ceramic Society, November 1984

Bailey and Barker: Ceramic Fibres for the Reinforcement of Gas Turbine Blades, published in Material Science Research 5, 1971, Plenum N.Y., pp 341 to 359

(73) Proprietor: **NORTON COMPANY**
**1 New Bond Street**
**Worcester Massachusetts 01606(US)**

(72) Inventor: **Bauer, Ralph**
**6211 Pine Grove Avenue**
**Niagara Falls Ontario L2G 4J1(CA)**

(74) Representative: **DIEHL GLAESER HILTL & PARTNER**
**Patentanwälte Flüggenstrasse 13**
**W-8000 München 19(DE)**

Rank Xerox (UK) Business Services

## Description

In the manufacture of so called sol-gel aluminum oxide ceramic articles and in particular aluminous abrasive grain, large volumes of water have been used to form the gels. These large volumes have been made necessary basically for 3 (three) reasons:

1. The prior art teaches that gels, particularly for abrasive purposes, made from gelable alumina powders should contain high levels (3-7 weight percent) of MgO. The MgO is introduced into the sol-gel as a solution of a magnesium salt. Such introduction of salt solutions dramatically increases the viscosity of the system. Therefore, to ensure good homogeneous mixing of the magnesium salt with the alumina gel it is necessary to work with a relatively dilute sol-gel so that upon addition of the magnesium salt the viscosity remains low enough so that efficient and good mixing remain possible. For conventional abrasive manufacture containing around 5% MgO, a solids content in the 15-25 weight % range may be conveniently worked with but becomes very tedius beyond that. See, for example, U.S. Patent 4,314,827 and published British application 2,099,012A.

2. The manufacture of gels from present commercially derived alumina monohydrate powders requires that some acid (e.g., nitric or formic) be added to the powder to allow the colloidal particles to disperse. In order to ensure that the acid can interact with all of the powder, the acid is diluted with a large volume of water and conventionally mixed in a high shear blender or other convenient mixer. If insufficient water is used, the gel becomes too viscous to homogeneously mix in the magnesia (as above) and also it is extremely difficult to gel agglomerates of unpeptized alumina powder. With conventional mixing it becomes very very tedious to ensure a homogeneous peptization beyond about 45 weight % solids content. Solids content refers only to alumina monohydrate content in the sol gel and neglects the magnesia salt.

3. Relatively large volumes of solvent (almost always water but could be a mixture of methanol-water or many other possibilities) are required in conventional gel preparation in order to ensure proper formation of the gel so that a coherent glassy dried green form is obtained. If insufficient water (solvent) is present the resulting green-ware is not coherent and tends to crumble easily, not at all exhibiting the glassy like features of the high water containing gel. When these poorer quality green bodies are sintered, the product tends to have weak zones and "pock marked" surfaces. This becomes especially noticeable beyond about 50 weight % solids.

The presence of large volumes of water has several major disadvantages:

1. energy cost to remove the water is extremely high because conventional dewatering such as filtration is difficult if not impossible once the gel is formed,

2. large capital investments are needed to provide large scale dewatering equipment,

3. volumes handled are large, and

4. control of shrinkage and cracking during drying is extremely difficult.

In view of the drawbacks of these conventional low solids content gels, I was led to investigate means whereby high quality ceramic articles, particularly abrasive grain could be made at high solids (greater than 30%) levels. Thus an object of the invention is to produce a high solids content aluminum oxide based gel system which will as a result have much improved economics of drying (dewatering) and permit much more control of greenware shrinkage and cracking during drying.

Our Application Serial No. 85 100 506.6 filed January 18, 1985 , teaches that high quality abrasive grain may be formed from a gel without the use of high levels of MgO. Rather than requiring the MgO as sintering aid/grain growth inhibitor, it has been found that an addition of extremely fine $Al_2O_3$ will allow the gel to sinter to greater than 90% theoretical density in only a few minutes and thereby still retain a submicron micro-structure.

Such a "seeded" ceramic abrasive material has been found to perform much better than the MgO containing "unseeded" gel in many grinding applications. The MgO may still be added to the "seeded" gel but generally does not improve performance any further and is often deleterious.

By eliminating magnesium salt additions then, I have effectively removed the first reason cited earlier for high water requirements, and the solids content can be increased by a factor of 2-3 times.

In order to insure complete peptization of the alumina (i.e. contact with acid), and to also insure "polymerization" i.e. contact with water, I resorted to using a high solids kneader/mixer and subsequent extrusion of the mix with either a piston or auger type extruder. It was felt that the pressure exerted on the mixed paste/gel would force the liquids (acid and water) into any remaining ungelled alumina powder compacts and provide a homogeneous gelled product. When the solids content was from 45-65 weight % it was found that pressures from 200 psi to 20 tons/square inch worked satisfactorily with the preferred pressured at 300 psi to 10 tons/square inch. Presumably, given a mixer with the combined features of mixing and exerting such pressures, the extrusion step could be omitted unless, of course, shape control was desired.

The problem of unpeptized material, typically in the amount of a few precent is recognized even in the case of dilute sol-gel dispersions, as indicated in U.S. Patent 4,314,827, where the use of a centrifuge is disclosed to eliminate such material. In the case of the high solids sol-gel dispersions of the present invention, removal of unpeptized material cannot be practically done by centrifuging. However, such material can be made peptizable by subjecting the mix to hydrothermal treatment e.g. 180°C. for 2 hours at autogenous pressure. Such treatment may or may not be needed depending upon the quality of the alumina monohydrate powder and the tolerable amount of unpeptized material in the product.

EXAMPLE I: Illustrates sintering enhancement by using "seeded" gel, preparation of high solids content gel and effects of extrusion.

In a Maternini mixer was put 8kg Condea Pural SB alumina monohydrate, 9.5kg of alumina gel (Condea base) at 20.7% solids which had been "seeded" with 10g ultra fine (submicron) $Al_2O_3$ generated from wear on Sweco mill (vibratory mill) alumina grinding media, and 400 ml concentrated nitric acid. The 56% solids paste which formed was very difficult to mix thoroughly and many sections of unreacted powder were visible. A sample of this paste was dried and sintered at 1400°C. for 10 minutes; the speciman showed a Vickers hardness of 16.5 GPa but many large pores and pits were visible. The remainder of the sample was extruded in a verticle piston extruder through a 1/16" die plate at a pressure of 13-15 tons per square inch and 27 inches of vacuum. The extrudate which was very pasty and crumbly going in, emerged as translucent/transparent fibres, quite homogeneous and relatively flaw free. The extrudate after sintering as described above had only a few small pores and uniform hardness of 16.5 GPa.

The extrudate, therefore, had hardness (density) equivalent to non-seeded MgO containing gels suitable for use as a superior abrasive.

The extrudate fibres dried essentially intact although some cracking was observed. Nonetheless, shrinkage and cracking control were much improved over the conventional 15-25%, gels and drying rates were increased dramatically.

EXAMPLE II: Illustrates preparation of high solids (50%) Gel extrusion and sintering to 97% theoretical density.

In a mix-muller were mixed 40 pounds Condea Pural SB monohydrate alumina powder, 11 pounds of Sweco milled water (66-1/2 hours milling with 1/2 x 1/2 cylindrical, 90% alumina, grinding media) which contained 2.266% solids, 14 pounds of tap water was added and the whole mixed. A mixture of 1600ml concentrated nitric acid and 1600ml tap water was then added the whole mixed for 2 minutes. Then 6 pounds more of tap water was added. The whole was mixed 2 minutes more and then piston extruded through 1/8" holes at 500-1000 pounds per square inch pressure. The mixed material as in the previous example did not seem to be homogeneously gelled and was somewhat granular. After extrusion the material appeared to be much more uniformly and homogeneously gelled. The extrudate after sintering at 1400°C. for 5 minutes had Vickers hardness of 19.5 - 20 GPa.

The aluminous bodies made by the process of the present invention may contain spinel formers such as alumina, modifying agents such as titania, and may serve as matrixes or bonding agents for other ceramic materials. By solids contents I mean 100% times the ratio of the weight of the alumina hydrate to the sum of the weight of the solid alumina hydrate starting material and the weight of added liquid. My invention comprehends a solids content of from 45% to as high as 75%. It should be noted that although the alumina (boehmite) starting materials are termed "monohydrates" they may in fact contain more or less than one mole of $H_2O$ per calculated mole of $Al_2O_3$.

By "seed material" I mean submicron sized alpha alumina particles or equivalent nucleation centers which produce a non-cellular submicron structures in the alumina bodies when fired for 10 minutes or less at 1400°C.

The optimum amount of submicron seed material (contained in the "milled water" in the above example) is 1% solids based on the total solids of the mixture. No more than 5% of such seed material should be added since at such levels above the optimum, it tends to increase the crystal size of the fired product and reduces the hardness of the product.

In all of the products of this invention, as in the above example, the fired crystal size of the alpha alumina body, (or matrix material when serving as a bonding agent) should be less than one micron.

The preferred firing temperature is 1400°C. or less, and in no event should be over 1500°C. to retain the required submicron crystal size of the product.

Hardnesses herein were measured by a Vickers diamond indenter point at a load of 500 grams.

The high solids gels of this invention may be shaped by extrusion or molded to produce wear resistant parts, parts designed for use in corrosive or high temperature environments, substrates for electronic applications, and any other applications where strong and dense alpha alumina bodies are required.

Where abrasive grits are desired, extruded rods of appropriate size may be formed then dried and crushed or broken up to the desired grit shapes prior to firing.

The gels of the present invention may also be used to form coatings, which are then fired to 3.9 or greater specific gravity.

EXAMPLE III: Illustrates usefullness of the invention as an abrasive and sintering to 99% density.

Eight (8) mixtures were prepared and extruded as in II. After drying at 80°C. the extrudate was impact crushed and fired (sintered) in a rotary electric kiln (SiC tube) under various conditions. The resultant grain was sized to 50 grit (Coated Abrasive Manufacturers Institute Standard) and evaluated as an abrasive on coated disc. The results are shown below:

4

| Test | Sintering Temp. ˚C. | Time Min. | Density (g/cm)$^3$ | Hardness (GPa) | Grinding Results as % Weight Removed Compared to Co-fused AZ Grits: | |
|---|---|---|---|---|---|---|
| | | | | | 1020 Steel | Stainless Steel |
| 1 | 1350 | 5 | 3.84 | 19.9 | 120 | 88 |
| 2 | 1350 | 10 | 3.89 | 19.9 | 100 | 82 |
| 3 | 1350 | 30 | 3.94 | 19.9 | 80 | 68 |
| 4 | 1350 | 60 | 3.95 | 19.1 | 80 | 54 |
| 5 | 1400 | 5 | 3.91 | 19.9 | 93 | 78 |
| 6 | 1400 | 10 | 3.94 | 19.1 | 76 | 67 |
| 7 | 1400 | 30 | 3.97 | 18.5 | 74 | 47 |

In this particular example, best grinding performance was obtained at relatively lower densities. This is so because at the higher densities, exaggerated grain growth has become a deleterious factor fracture characteristics of the material. This does not mean that in general better grinding will occur with lower density.

The data indicates that the gel can sinter to near theoretical density under relatively mild conditions.

The comparison abrasive, co-fused alumina zirconia, is the best prior art fused abrasive material for use in coated abrasives. The results reported in the table refer to the weight of material removed before failure from (1) a 1020 steel speciman as a % of the weight removed by an alumina-zirconia coated disc, and (2) the weight of stainless removed by the test abrasive as a % of that removed by the alumina-zirconia abrasive, under identical test conditions.

## Claims

1. A method for making polycrystalline alpha alumina bodies having a submicron crystal size and a density of at least 90% of theoretical

   in which a homogeneous gelled product is prepared by mixing alumina hydrate powder with water, a seed material and acid to a solid content of at least 45%, by weight, to form a mixture still containing ungelled alumina powder compacts and subsequently extruding the mixture, whereby pressure is exerted on the mixture during extruding to force the water and acid into contact with such ungelled alumina powder to render the product uniformly and homogeneously gelled, and the product is fired at a temperature not over 1500°C.

2. The method of claim 1, wherein said seed material includes submicron size alpha alumina particles or equivalent nucleation centers.

3. The method of claim 1 or 2, wherein the seed material is present in an amount not greater than 5% and preferably about 1% by weight of the solids in the mixture.

4. The method of any one of the preceding claims wherein the firing temperature is less than 1400°C.

5. The method of any one of the preceding claims wherein the solid content of the mixture is between 50% and 75% by weight.

6. The method of any one of the preceding claims in which the mixture is subjected to a hydrothermal treatment prior to shaping and firing.

7. The method of any one of the preceding claims in which the pressure is exerted while forcing the mixture through an extrusion die.

8. The method of any one of the preceding claims in which the solid content is between 45% and 65% by weight and a pressure from 1.38 MPa (200 psi) to 309 MPa (20 tons/in$^2$) is exerted.

9. The method of any one of the preceding claims further including the step of drying the gelled product and breaking up or crushing it prior to firing to form abrasive grits.

## Patentansprüche

1. Verfahren zur Herstellung von polykristallinen Alpha-Aluminiumkörpern mit einer Submikronkristallgröße und einer Dichte, die wenigstens 90 % der theoretischen Dichte beträgt,

   bei welchem ein homogen geliertes Produkt hergestellt wird, indem Aluminiumoxidhydratpulver mit Wasser, einem Impfmaterial und Säure bis zu einem Feststoffgehalt von wenigstens 45 Gew.-% gemischt wird, wobei ein Gemisch gebildet wird, das immer noch nichtgelierte Aluminiumoxidpulverpreßlinge enthält, die Mischung anschließend extrudiert wird, wobei während des Extrudierens ein Druck ausgeübt wird, um Wasser und Säure mit dem nicht gelierten Aluminiumoxidpulver in Kontakt zu zwingen, damit das Produkt gleichmäßig und homogen geliert wird, und das Produkt bei einer Temperatur von nicht über 1500°C gebrannt wird.

2. Verfahren nach Anspruch 1, wobei das Impfmaterial Alphaaluminiumoxidpartikel von Submikrongröße oder gleichwertige Keimzentren enthält.

3. Verfahren nach Anspruch 1 oder 2, wobei das Impfmaterial in einer Menge von nicht mehr als 5 Gew.-%, vorzugsweise etwa 1 Gew.-%, der Feststoffe in dem Gemisch vorliegt.

4. Verfahren nach einem der vorhergehenden Ansprüche, wobei die Brenntemperatur weniger als 1400°C beträgt.

5. Verfahren nach einem der vorhergehenden Ansprüche, wobei der Feststoffgehalt in dem Gemisch zwischen 50 und 75 Gew.-% beträgt.

6. Verfahren nach einem der vorhergehenden Ansprüche, bei welchem das Gemisch vor dem Formen und Brennen einer Hydrothermalbehandlung unterworfen wird.

7. Verfahren nach einem der vorhergehenden Ansprüche, bei welchem der Druck ausgeübt wird, während das Gemisch durch ein Strangpressformwerkzeug gezwungen wird.

8. Verfahren nach einem der vorhergehenden Ansprüche, bei welchem der Feststoffgehalt zwischen 45 und 65 Gew.-% beträgt und ein Druck von 1,38 MPa (200 psi) bis 309 MPa (20 Tonnen/inch$^2$) ausgeübt wird.

9. Verfahren nach einem der vorhergehenden Ansprüche, das als weiteren Schritt das Trocknen des gelierten Produkts und vor dem Brennen das Brechen oder Zerkleinern desselben aufweist, um Schleifkörner zu bilden.

**Revendications**

1. Procédé pour la fabrication de corps en alpha-alumine polycristalline ayant une taille de cristaux inférieure au micron et une densité d'au moins 90% de la densité théorique
   dans laquelle un produit gélifié homogène est préparé par mélange de poudre d'hydrate d'alumine avec de l'eau, d'un matériau formant germe et d'un acide jusqu'à une teneur en solides d'au moins 45% en poids pour former un mélange contenant toujours des masses compactes de poudre d'alumine non gélifiée, puis par extrusion du mélange, une pression étant, ce faisant, exercée sur le mélange pendant l'extrusion pour contraindre l'eau et l'acide à venir en contact avec cette poudre d'alumine non gélifiée pour rendre le produit gélifié de façon uniforme et homogène après quoi le produit est cuit à une température n'excédant Pas 1500°C.

2. Procédé selon la revendication 1, dans lequel ledit matériau formant germe comprend des particules d'alpha-alumine d'une taille inférieure au micron ou des centres de nucléation équivalents.

3. Procédé selon la revendication 1 ou 2, dans lequel le matériau formant germe est présent en une quantité n'excédant pas 5% et de préférence en une quantité égale à environ 1% en poids des solides du mélange.

4. Procédé selon l'une quelconque des revendications précédentes, dans lequel la température de cuisson est inférieure à 1400°C.

5. Procédé selon l'une quelconque des revendications précédentes, dans lequel la teneur en solides du mélange est comprise entre 50% et 75% en poids.

6. Procédé selon l'une quelconque des revendications précédentes, dans lequel le mélange est soumis à un traitement hydrothermique préalable à sa conformation et à sa cuisson.

7. Procédé selon l'une quelconque des revendications précédentes, dans lequel la pression est exercée tout en forçant le mélange au travers d'une filière d'extrusion.

8. Procédé selon l'une quelconque des revendications précédentes, dans lequel la teneur en solides est comprise entre 45% et 65% en poids et en ce que l'on exerce une pression comprise entre 1,38 MPa (200 livres/pouce$^2$) et 309 MPa (20 tonnes/pouce$^2$).

9. Procédé selon l'une quelconque des revendications précédentes, qui comporte en outre une étape de séchage du produit gélifié et de brisure ou d'écrasement dudit produit avant la cuisson pour former des grains abrasifs.